# EUROPEAN PATENT APPLICATION

(11) **EP 1 876 827 A2**
(43) Date of publication of application: **09.01.2008**
(21) Application number: 07111024.1
(22) Date of filing: 26.06.2007
(51) Int. Cl.: H04N 7/173

(54) **Broadcasting receiving apparatus and control method thereof**

(30) Priority: 05.07.2006 KR 20060063076
(71) Applicant: Samsung Electronics Co., Ltd., Suwon-si 442-742 Gyeonggi-do (KR)
(72) Inventor: Yum, Duck-ki, Seoul (KR)
(74) Representative: Clark, David James

(57) **Abstract**

A broadcast receiving apparatus and method of use are provided to receive a broadcast signal including content information and includes a content audio processing part (222) to process and output a data audio signal based on the content information, and a controller (300) to control the content audio processing part (222) to output the data audio signal if a user selects to output the content information.

## Description

The present invention relates to a broadcast receiving apparatus and a control method thereof. More particularly, the present invention relates to a broadcast receiving apparatus and a control method thereof, which receives a broadcasting signal including content information.

As digital broadcasting has developed, two-way broadcasting has been recently commercialized, which denotes a system in which a broadcast provider provides a broadcasting signal including content information to a user, and the user may actively use the content information through a broadcast receiving apparatus such as a TV.

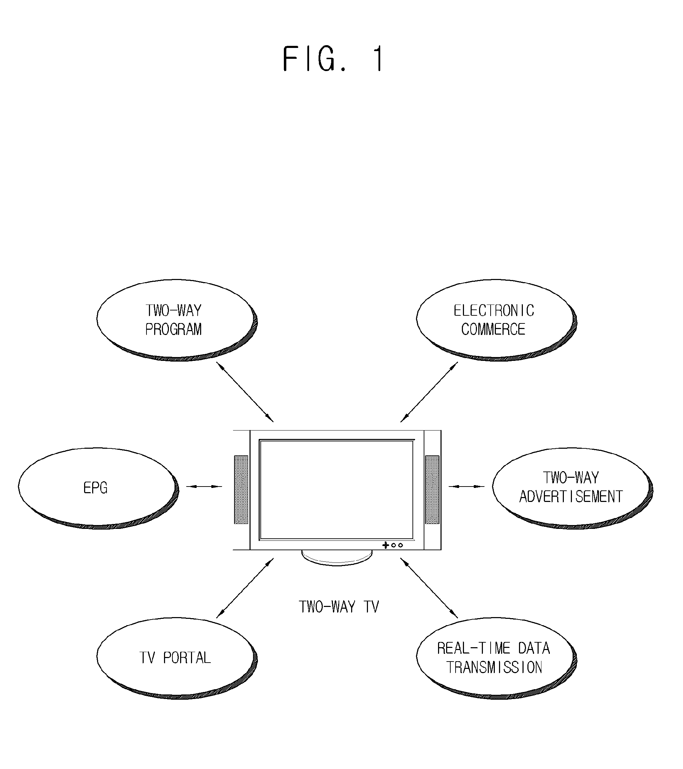

FIG. 1 is a diagram illustrating exemplary services of content information.

As illustrated, the content information can comprise a two-way program to induce a user's participation such as in the case of electronic voting, electronic commerce capable of allowing purchasing through a TV, two-way advertisement, real-time data transmission, a TV portal service capable of information retrieval and community activity, an EPG (Electronic Program Guide), and the like.

A conventional broadcast receiving apparatus processes a content video signal of the content information, and displays a corresponding video on the display part as an OSD (On Screen Display) type and/or a PIP (Picture In Picture) type.

It is an aim of example embodiments of the present invention to enable a richer program experience by expanding the scope of content information.

According to an aspect of the invention there is provided a broadcast receiving apparatus to receive a broadcast signal including content information, comprising a content audio processing part to process and output a data audio signal based on the content information, and a controller to control the content audio processing part to output the data audio signal if a user selects to output the content information.

Suitably, the broadcast receiving apparatus further comprises a demultiplexer, wherein the controller controls the demultiplexer to separate the content information from the broadcast signal if the broadcast receiving apparatus receives the broadcast signal.

Suitably, the controller controls the content audio processing part to adjust the volume of the data audio signal.

Suitably, the broadcast receiving apparatus further comprises a main audio processing part to process and output a broadcast audio signal based on the broadcast signal, wherein the controller controls the main audio processing part to prevent the output of the broadcast audio signal if the user selects to mute the broadcast audio signal.

Suitably, the controller controls the content audio processing part to prevent the output of the data audio signal if the user selects to mute the data audio signal.

Suitably, the broadcast receiving apparatus further comprises a content video processing part to process a data video signal based on the content information, wherein the controller controls the content video processing part to output the data video signal if the user selects to output the content information.

Suitably, the data video signal comprises location information.

Suitably, the broadcast receiving apparatus further comprises a main video processing part to process a broadcast video signal based on the broadcast signal, wherein the controller controls the main video processing part to process the broadcast video signal, and the controller controls the content video processing part to process the data video signal according to the location information if the user selects to output the content information.

Suitably, the broadcast receiving apparatus further comprises at least one speaker to output at least one of the broadcast audio signal and the data audio signal.

Suitably, a standard of the content information comprises an Advanced Common Application Platform (ACAP).

Acccording to another aspect of the invention there is provided a method of controlling the broadcast receiving apparatus, comprising receiving a broadcast signal including content information, and processing and outputting a data audio signal based on the content information if a user selects to output the content information.

Suitably, the method further comprises separating the content information from the broadcast signal.

Suitably, the outputting of the data audio signal comprises adjusting the volume of the data audio signal

Suitably, the method further comprises preventing the output of a broadcast audio signal based on the broadcast signal if the user selects to mute the broadcast audio signal.

Suitably, the method further comprises preventing the output of the data audio signal if the user selects to mute the data audio signal.

Suitably, the method further comprises processing and outputting a data video signal based on the content information if the user selects to output the content information.

Suitably, the method further comprises outputting the data video signal according to location information of the data video signal.

For a better understanding of the invention, and to show how embodiments of the same may be carried into effect, reference will now be made, by way of example, to the accompanying diagrammatic drawings in which:
FIG. 1 is a diagram illustrating services of content information;
FIG. 2 is a control block diagram illustrating a broadcast receiving apparatus according to a first exemplary embodiment of the present invention;
FIG. 3 is a control block diagram illustrating a broadcast receiving apparatus according to a second exemplary embodiment of the present invention;
FIG. 4 is a control flowchart illustrating a broadcast receiving apparatus according to the first embodiment of the present invention; and
FIG. 5 is a control flowchart illustrating a broadcast receiving apparatus according to the second embodiment of the present invention.

Reference will now be made in detail to embodiments of the present invention, examples of which are illustrated in the accompanying drawings.

As noted above, FIG. 1 is a diagram illustrating services of content information for use with a two-way TV. The content information can comprise a two-way program to induce a user's participation such as in the case of electronic voting, electronic commerce capable of allowing purchasing through a TV, two-way advertisement, real-time data transmission, a TV portal service capable of information retrieval and community activity, an EPG (Electronic Program Guide), and the like. A broadcast provider may in future transmit a content audio signal of content information to the user to provide a richer program experience and more active two-way broadcasts.

For example, the broadcast provider may provide the data signal including content video and audio information on respective objects of a ground wave broadcast program. Accordingly, a user can watch a main broadcast program, and at the same time, can access the content video and audio information related to respective objects of the main broadcast program.

As described above, the broadcast provider supports an integrated multi-media business, and thus provides multi-media content information for various relevant business fields. Accordingly, there has been a need to develop new broadcast receiving apparatuses that are capable of arousing user's interest and inducing more participation.

However, a conventional broadcast receiving apparatus can process and output only a content video signal,and accordingly, a user may feel inconvenience while using the new integrated multi-media contents.

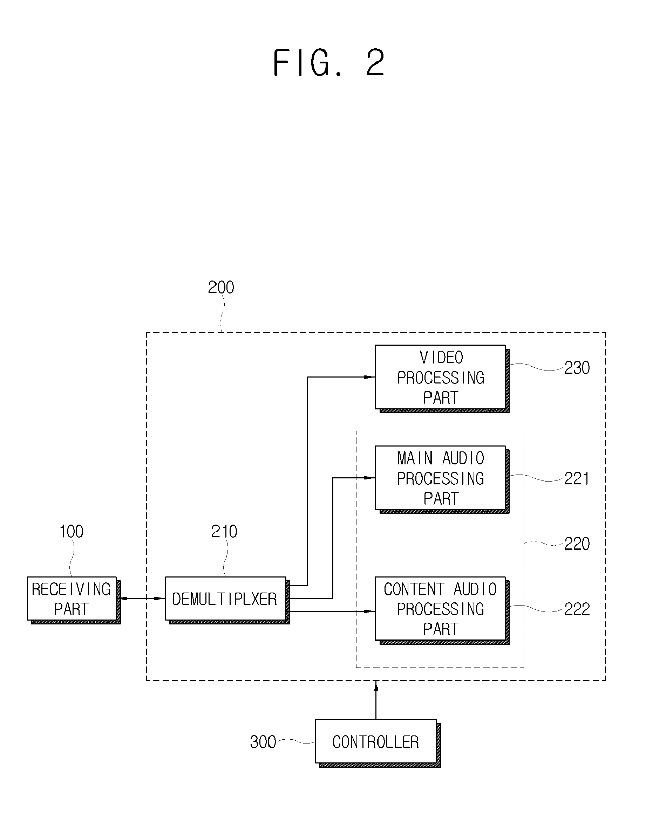

FIG. 2 is a control block diagram illustrating a broadcast receiving apparatus according to a first exemplary embodiment of the present invention. As illustrated in FIG. 2, a broadcast receiving apparatus according to a first embodiment of the present invention comprises a receiving part 100, a signal processing part 200, and a controller 300 to control the receiving part 100 and the signal processing part 200.

The receiving part 100 receives a broadcast signal from an outside source. Herein, the receiving part 100 can include a tuner and the like, for receiving the broadcast signal from the outside source. At this time, the tuner selects a frequency corresponding to a channel selected by a user and receives a broadcast signal having the selected frequency.

The broadcast signal according to embodiments of the present invention can include a broadcast video signal, a broadcast audio signal, and a data signal having content information, but is not limited thereto. Further, the broadcast signal can be encoded. For example, the broadcast signal can be encoded into an MPEG2 (Moving Picture Experts Group) transport stream.

The following description will use as an example, a data signal that can be transmitted based on an ACAP (Advanced Common Application Platform), which is a data broadcast standard of an ATSC (Advanced Television System Committee).

The signal processing part 200 processes and outputs a broadcast signal received from the receiving part 100 according to the control of the controller 300, described in greater detail below. Herein, the signal processing part 200 comprises a demultiplexer 210, an audio processing part 220, and a video processing part 230. The audio processing part 220 comprises a main audio processing part 221 and a content audio processing part 222.

The demultiplexer 210, according to the control of the controller 300, divides the broadcast signal received from the receiving part 100 into a main broadcast signal and the data signal including content information having various data. Further, the demultiplexer 210 divides the main broadcast signal into a main video broadcast signal and a main audio broadcast signal, and divides the data signal into a data video signal and a data audio signal. Herein, the demultiplexer 210 comprises a section filter (not shown) to search and filter a packet having a corresponding type of a PMT (Program Map Table) of the transport stream, thereby dividing the main broadcast signal and the data signal partitioned by section into the main video and audio broadcast signals, and the data video and audio signals, respectively.

The audio processing part 220 processes the main audio broadcast signal and the data audio signal divided through the demultiplexer 210, and outputs them in an appropriate format according to the control of the controller 300, described in greater detail below. Herein, the audio processing part 220 includes the main audio processing part 221 and the content audio processing part 222.

That is, the main audio processing part 221 processes and outputs the main broadcast audio signal divided through the demultiplexer 210. In particular, the main audio processing part 221 decodes the divided main broadcast audio signal, and outputs the decoded main broadcast audio signal in a desired format.

The content audio processing part 222 processes and outputs the data audio signal divided through the demultiplexer 210. Particularly, the content audio processing part 222 decodes the divided data audio signal, and outputs the decoded data audio signal in a desired format.

The video processing part 230 processes the main broadcast video signal and the data video signal divided through the demultiplexer 210, and outputs them in a desired format according to the control of the controller 300.

The controller 300 controls the signal processing part 200 to process and output the broadcast signal received from the receiving part 100. In particular, the controller 300 controls the demultiplexer 210 to divide the broadcast signal received from the receiving part 100 into the main broadcast video and audio signals, and the data video and audio signals including content information having various data.

Further, the controller 300 controls the audio processing part 220 to process the main broadcast audio signal and the data audio signal divided through the demultiplexer 210 to output them in a desired format.

The controller 300 also controls the video processing part 230 to process the main broadcast video signal and the data video signal divided through the demultiplexer 210 to output them in a desired format.

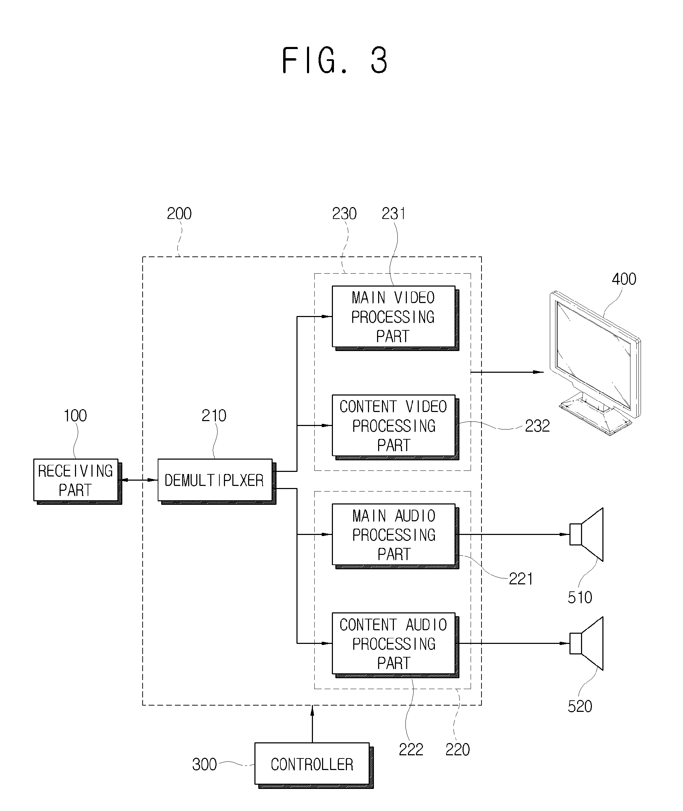

FIG. 3 is a control block diagram illustrating a broadcast receiving apparatus according to a second exemplary embodiment of the present invention.

Hereinafter, the broadcast receiving apparatus according to the second embodiment of the present invention will be described with reference to a digital TV by way of example. Here, the digital TV receives and processes a digital broadcast signal, and outputs the processed digital broadcast signal on a display part 400 such as an LCD (Liquid Crystal Display) panel or a PDP (Plasma Display Panel).

As illustrated, in the second embodiment of the present invention, the broadcast receiving apparatus has substantially the same configuration and functions of each part thereof as that in the first embodiment of FIG. 2. Accordingly, repeated descriptions thereof will be omitted.

The video processing part 230 processes a video signal divided through the multiplexer 210, and outputs the processed video signal in a desired format depending on the control of the controller 300, described in greater detail below. Herein, the video processing part 230 further comprises a main video processing part 231 and a content video processing part 232.

The main video processing part 231 processes a broadcast video signal divided through the demultiplexer 210 and provides the processed broadcast video signal for display on the display part 400. Herein, the main video processing part 231 performs various additional functions corresponding to a format of the received broadcast video signal. For example, the additional functions suitably include an A/D converting function to convert received video signals in various formats into digital video signal in a specific format, a digital decoding function, a scaling function to adjust a vertical frequency, resolution, an aspect ratio, and so forth, of the received digital video and/or analog signal according to an output standard of the display part 400, and a predetermined format converting function.

The content video processing part 232 processes the data video signal divided through the demultiplexer 210, and provides the processed data video signal for display on the display part 400. In particular, the content video processing part 232 processes the data video signal according to location information included in the data video signal, and provides the processed data video signal for display on the display part 400.

For example, the data video signal can be displayed as a partial screen, such as an OSD and/or a PIP, on the display part 400.

The controller 300 controls the signal processing part 200 to process the broadcast signal received from the receiving part 100. Particularly, the controller 300 controls the signal processing part 200 to process and output the data audio signal according to a user's selection.

The controller 300 controls the demultiplexer 210 to divide the broadcast signal received from the receiving part 100 into the main broadcast video and audio signals, and the data video and audio signals, respectively. Further, the controller 300 controls the video processing part 220 and the audio processing part 230 to decode main broadcast video and audio signals and data video and audio signals, respectively, and to output them each in a desired format.

At this time, in the case where the broadcast signal including content information is received, if a user selects a function to output a data audio signal corresponding to the content information, the controller 300 controls the content audio processing part 222 to process the data audio signal, and controls a first speaker 520 to output the processed data audio signal.

Here, if a user selects a function to adjust the volume of the data audio signal, the controller 300 controls the content audio processing part 222 to output the data audio signal having its volume adjusted depending on the user selection to the first speaker 520. Herein, the broadcast receiving apparatus can display a user interface (UI) screen having a volume adjusting screen on the display part 400 or include a key, button, or the like, mounted thereon through which the user can adjust the volume of the data audio signal.

If the user selects a function to mute the data audio signal, the controller 300 controls the content audio processing part 222 to prevent output of the data audio signal to the first speaker 520.

However, if the user selects a function to output the data video signal of the content information, the controller 300 controls the content video processing part 232 to process the data video signal according to location information included in the data video signal so that the display part 400 displays it at a specific area thereon.

For example, if content information includes a service such as a two-way electronic commerce connected to a broadcast program received through a channel, the data video signal corresponding to the content information can include price information and so forth, related to specific merchandise used in the broadcast program. Here, when the specific merchandise used in the broadcast program is displayed at a specific area on the display part 400, the data video signal related to the specific merchandise can be displayed as an OSD and/or a PIP according to the specific area corresponding to the specific merchandise.

If the content information includes an independent service such as a video game, karaoke, and the like, when the user selects a function to mute a main broadcast audio signal, the controller 300 controls the main audio processing part 221 to prevent the output of the main broadcast audio signal from a second speaker 510.

As described above, the broadcast receiving apparatus according to the second embodiment of the present invention has been described with reference to the second speaker 510 and the first speaker 520 to output the main audio signal and the data audio signal, respectively, by way of example. However, the present invention is not limited to this embodiment. Further, embodiments of the present invention are not limited to the number of speakers and locations of speakers as shown in FIG. 3 (for example, an outside speaker or a built-in speaker).

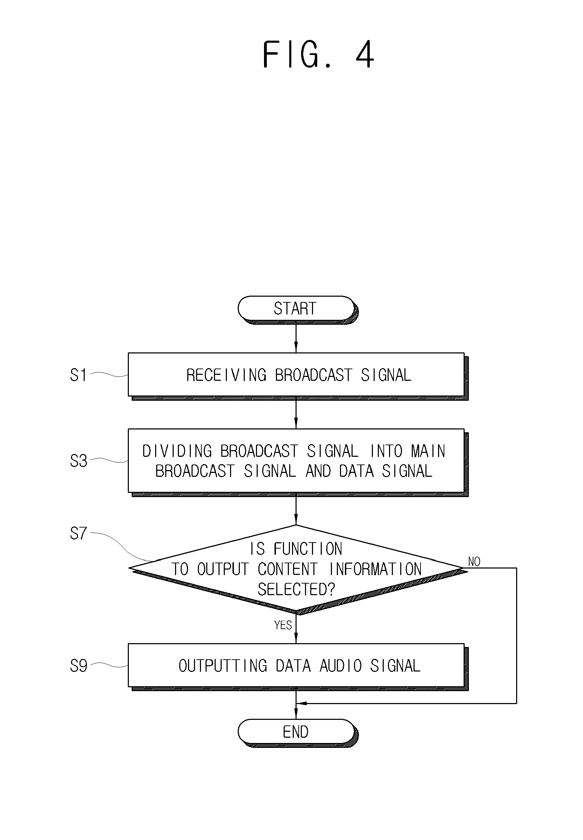

FIG. 4 is a control flowchart illustrating a broadcast receiving apparatus according to the first embodiment of the present invention.

First, if a user selects a channel, the broadcast receiving apparatus receives a broadcast signal corresponding to the selected channel at step (S1). The demultiplexer 210 then divides the broadcast signal into a main broadcast signal and a data signal at step (S3). In particular, the demultiplexer 210 divides an audio signal received in a transport stream format into a main broadcast audio signal and a data audio signal according to the control of the controller 300.

At this time, if the user selects a function to output content information of the data audio signal at step (S7), the controller 300 controls the content audio processing part 222 to process the data audio signal to output it through a speaker (not shown) at step (S9).

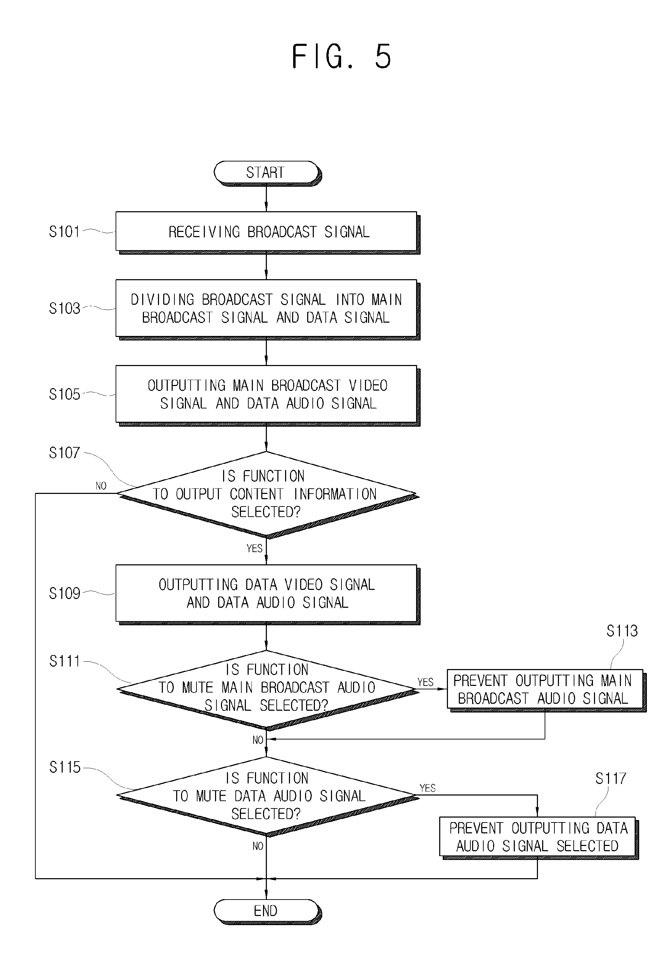

FIG. 5 is a control flowchart illustrating a broadcast receiving apparatus according to the second embodiment of the present invention. Hereinafter, an operation of the broadcast receiving apparatus that receives and processes a broadcast signal including main broadcast video and audio signals and data video and audio signals will be described.

First, if a user selects a channel, the broadcast receiving apparatus receives a broadcast signal corresponding to the selected channel at step (S101). The demultiplexer 210 then divides the broadcast signal into a main broadcast signal and a data signal at step (S103). In particular, the demultiplexer 210 divides a video signal and an audio signal received in a transport stream format into main broadcast video and audio signals and data video and audio signals through a section filtering operation according to the control of the controller 300.

The main broadcast video signal and the main broadcast audio signal, which are divided in the operation (S103), are processed in the main video processing part 231 and the main audio processing part 221, respectively, according to the control of the controller 300. The processed main broadcast video and audio signals are then displayed on the display part 400 and output to the second speaker 510, respectively, at step (S105).

At this time, if the user selects a function to output content information at step (S107), the controller 300 controls the content video processing part 232 and the content audio processing part 222 to process the data video signal and the data audio signal, respectively. The processed data video and audio signals are then displayed on the display part 400 and output to the first speaker 520, respectively at step (S109).

If the user further inputs a user instruction to mute the main broadcast audio signal at step (S111), the controller 300 controls the main audio processing part 221 to prevent the output of the main broadcast audio signal to the second speaker 510 at step (S113).

Regardless of selecting the function to mute the main broadcast audio signal at the operation (S111), if the user selects a function to mute the data audio signal at step (S115), the controller 300 controls the content audio part 222 to prevent the output of the data audio signal through the first speaker 520 at step (S117).

The content information according to embodiments of the present invention, which is transmitted based on an ACAP (Advanced Common Application Platform), i.e. a ground wave data broadcast standard, has been described by way of example. However, embodiments of the present invention are not limited to these embodiments. Alternatively, in the case of data broadcast to employ a DSM-CC (Digital Storage Media Command and Control) system, the content information can be transmitted based on any type of platform, such as an OCAP (Open Cable Application Platform) for a cable broadcast standard and a MHP (Multimedia Home Platform) for a satellite broadcast standard.

Further, the broadcast receiving apparatus according to embodiments of the present invention has been described with reference to a digital TV by way of example, but is not limited thereto. Alternatively, the broadcast receiving apparatus can comprise any apparatus that is substantially capable of receiving and outputting a broadcast signal such as a set-top box, a computer, and the like.

As apparent from the above description, according to embodiments of the present invention, a broadcast receiving apparatus and a control method thereof are provided, which can output a data audio signal corresponding to content information to provide convenience and pleasure to a user when using the new integrated multi-media contents.

A broadcast receiving apparatus and the control method thereof are further provided which can suitably process and output content information which may be provided by the broadcasting industry so that the user can use various kinds of contents.

A broadcast receiving apparatus and the control method thereof are still further provided which can separately control a broadcast audio signal and a data audio signal to independently use content information.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A broadcast receiving apparatus to receive a broadcast signal including content information, comprising:
a content audio processing part (222) to process and output a data audio signal based on the content information; and
a controller (300) to control the content audio processing part (222) to output the data audio signal if a user selects to output the content information.

2. The broadcast receiving apparatus according to claim 1, further comprising:
a demultiplexer (210), wherein the controller (300) is configured to control the demultiplexer (210) to separate the content information from the broadcast signal if the broadcast receiving apparatus receives the broadcast signal.

3. The broadcast receiving apparatus according to claim 1 or 2, wherein the controller (300) is configured to control the content audio processing part (222) to adjust a volume of the data audio signal.

4. The broadcast receiving apparatus according to any one of claims 1-3, further comprising:
a main audio processing part (221) to process and output a broadcast audio signal based on the broadcast signal, wherein the controller (300) is configured to control the main audio processing part (221) to prevent output of the broadcast audio signal if the user selects to mute the broadcast audio signal.

5. The broadcast receiving apparatus according to any one of claims 1-4, wherein the controller (300) is configured to control the content audio processing part (222) to prevent output of the data audio signal if the user selects to mute the data audio signal.

6. The broadcast receiving apparatus according to any one of claims 1-5, further comprising:
a content video processing part (232) to process a data video signal based on the content information, wherein the controller (300) is configured to control the content video processing part (232) to output the data video signal if the user selects to output the content information.

7. The broadcast receiving apparatus according to claim 6, wherein the data video signal comprises location information.

8. The broadcast receiving apparatus according to claim 7, further comprising:
a main video processing part (231) to process a broadcast video signal based on the broadcast signal, wherein the controller (300) is configured to control the main video processing part (231) to process the broadcast video signal, and control the content video processing part (231) to process the data video signal according to the location information, if the user selects to output the content information.

9. The broadcast receiving apparatus according to any one of claims 1-8, further comprising at least one speaker (510, 520) to output at least one of the broadcast audio signal and the data audio signal.

10. The broadcast receiving apparatus according to any one of claims 1-9, wherein a standard of the content information comprises an Advanced Common Application Platform (ACAP).

11. A method of controlling a broadcast receiving apparatus, comprising:
receiving a broadcast signal including content information (S1); and
processing and outputting a data audio signal based on the content information if a user selects to output the content information (S3-S9).

12. The method according to claim 11, further comprising separating the content information from the broadcast signal (S3).

13. The method according to claim 11 or 12, wherein the step of outputting the data audio signal comprises adjusting a volume of the data audio signal.

14. The method according to claim 11, 12 or 13, further comprising preventing output of a broadcast audio signal based on the broadcast signal if the user selects to mute the broadcast audio signal (S111, S113).

15. The method according to any one of claims 11-14, further comprising preventing output of the data audio signal if the user selects to mute the data audio signal (S115, S117).

16. The method according to any one of claims 11-15, further comprising processing and outputting a data video signal based on the content information if the user selects to output the content information (S107, S109).

17. The method according to claim 16, further comprising outputting the data video signal according to location information of the data video signal.
